# EUROPÄISCHE PATENTSCHRIFT

(11) **EP 2 588 297 B1**
(45) Veröffentlichungstag und Bekanntmachung des Hinweises auf die Patenterteilung: **01.10.2014**
(21) Anmeldenummer: 11805389.1
(22) Anmeldetag: 28.06.2011
(51) Int. Cl.: B29C 70/48

(54) **VORRICHTUNG ZUR DURCHFÜHRUNG EINES RESIN-TRANSFER-MOULDING- (RTM) VERFAHRENS UND RESIN-TRANSFER-MOULDING- (RTM) VERFAHREN**
APPARATUS FOR CARRYING OUT A RESIN TRANSFER MOULDING (RTM) PROCESS AND RESIN TRANSFER MOULDING (RTM) PROCESS
DISPOSITIF PERMETTANT DE METTRE EN OEUVRE UN PROCÉDÉ DE MOULAGE PAR TRANSFERT DE RÉSINE (RTM) ET PROCÉDÉ DE MOULAGE PAR TRANSFERT DE RÉSINE (RTM)

(30) Priorität: 29.06.2010 US 359600 P; 29.06.2010 DE 202010007931 U
(43) Veröffentlichungstag der Anmeldung: 08.05.2013
(73) Patentinhaber: First Composites GmbH, 56589 Niederbreitbach (DE)
(72) Erfinder: KRÄMER, Dirk, 56589 Niederbreitbach (DE)
(74) Vertreter: Rumrich, Gabriele
(86) Internationale Anmeldenummer: PCT/DE2011/075151
(87) Internationale Veröffentlichungsnummer: WO 2012/052009

(56) Entgegenhaltungen:
- DE-A1-102009 010 692
- FR-A1- 2 771 960
- US-A- 5 518 388
- US-A1- 2005 040 553
- US-A1- 2007 145 622
- UNTERBERGER M ET AL: "PRODUKTIONSPARAMETER BEIM RRIM-PROZESS KONTINUIERLICH UEBERWACHEN", KUNSTOFFE INTERNATIONAL, CARL HANSER VERLAG, MUNCHEN, DE, Bd. 80, Nr. 8, 1. August 1990 (1990-08-01) , Seiten 877-879, XP000150773, ISSN: 0023-5563

## Beschreibung

Die Erfindung betrifft eine Vorrichtung zur Durchführung eines Resin-Transfer-Moulding- (RTM) Verfahrens und ein RTM Verfahren zur Herstellung von insbesondere Integralbauteilen.

Das RTM-Verfahren wird seit mehreren Jahren zur Herstellung von Integralbauteilen verwendet. Es ist ein Harzinfusionsverfahren und wird meist zur Herstellung von Faserverbundbauteilen verwendet. Laut Wikipedia ist das Resin Transfer Moulding oder Resin Transfer Molding (RTM) ein Verfahren zur Herstellung von Formteilen aus Duroplasten und Elastomeren. Im Vergleich zum Pressen wird hierbei die Formmasse mittels Kolben von einer meist beheizten Vorkammer über Verteilerkanäle in das Formnest eingespritzt, worin sie unter Wärme und Druck aushärtet.

Als Formmasse können Formaldehydharze (PF, MF usw.) und Reaktionsharze (UP, EP) mit kleinen Füllstoffpartikeln und Elastomere verwendet werden.

Zu Beginn eines Zyklus befindet sich eine vorplastifizierte und dosierte Formmasse in einer Vorkammer. Zunächst wird das Werkzeug geschlossen. Danach wird die Formmasse ins Werkzeug eingespritzt und für eine bestimmte Zeit im Werkzeug belassen. Bei dieser sogenannten Verweilzeit kommt es zum Reagieren oder Vulkanisieren der Formmasse. Sie ist dabei von verschiedenen Faktoren abhängig (Harztyp, Füllstoff, Verarbeitungsdruck und -temperatur). Ist die Verweilzeit beendet, kann das Werkzeug geöffnet werden. Die zuvor eingefüllte Formmasse ist nun fest (ausgehärtet) und wird jetzt als Formteil bezeichnet. Dieses kann nun aus dem Werkzeug entformt werden. Danach erfolgt die Reinigung des Werkzeugs und ein neuer Zyklus kann beginnen. Die beim Einpressen und Nachpressen benötigte Formmasse sollte dabei immer größer als das endgültige Formteil sein, damit das Werkzeug vollständig befüllt wird. Somit wird garantiert, dass das Formteil vollständig ausgebildet ist und keine Luft eingepresst wird. Die dabei in der Vorkammer überschüssige, zurückgebliebene Formmasse, auch als Restkuchen bezeichnet, muss vor dem Beginn des neuen Zyklus entfernt werden und durch neue Formmasse ersetzt werden. Um auch lange Fasern oder Faserhalbzeuge (Prewovens/Preform/ Preformling) zu verarbeiten, werden diese zuvor in das Werkzeug eingelegt und mit der Formmasse umspritzt. Um Lufteinschlüsse zu vermeiden, wird meist zusätzlich die Kavität (Formhohlraum) evakuiert.

Als Injektionsharze werden meist Harze verwendet, die eine niedrige Viskosität besitzen. Dadurch bleibt der Strömungswiderstand beim Durchströmen der Form gering und es sind kleinere Druckdifferenzen zum Füllen notwendig. Reaktionsharze für RTM-Verfahren werden als spezielle Injektionsharze angeboten, die aus einer Harz- und Härterkomponente bestehen. Während des Injektionsprozesses fließt beim RTM-Verfahren Harz mit der entsprechenden Fließgeschwindigkeit durch den Formenhohlrau, füllt diesen aus, benetzt die eingelegten Materialien und tritt aus dem Werkzeug aus.

Niedrigreaktive Harzsysteme können bereits vor der Infusion gemischt werden. Möchte man hochreaktive Harzsysteme verwenden, so können Harz und Härter erst unmittelbar in der Infusionsleitung bzw. der Form gemischt werden. Auf diese Weise sind geringere Taktzeiten möglich. Verfahren, bei denen die Injektionsharz-Komponenten erst unmittelbar vor der Injektion gemischt werden, sind auch als RIM-Verfahren (Reaction Injection Moulding) bekannt.

In der Patentliteratur wird beispielsweise in der Druckschrift DE 600 11 752 T2 ein Verfahren zur Herstellung von Strukturteilen aus Composites-Material nach dem Harz-Injektions-Verfahren und eine entsprechende Vorrichtung beschrieben. Mit dieser Lösung wird die Vakuumabdichtung der geschlossenen Form vor dem Harztransfer verifiziert und es werden ausgehärtete Harzreste, die nicht für das Bauteil verwendet werden, aus einem Behälter gelöst, der zur zusätzlichen Konditionierung und zusätzlichen Zufuhr von Harz verwendet wird. Weiterhin wird der Druck zur Bestimmung der Dichtheit der Form gemessen und es ist eine Temperatursteuervorrichtung vorgesehen.

Weiterhin ist aus der Druckschrift DE 10 2007 060 739 A1 ein Verfahren und ein Formwerkzeug zur Herstellung von Faserverbundbauteilen bekannt, bei welchem der Verlauf der Fließfront mit zu der Formenkavität gewandten Drucksensoren erfasst wird, und in Abhängigkeit von der Fließfront das Kühlen im Kantenbereich variiert wird.

In DE 10 2009 010 692 A1 wird unter anderem eine Vorrichtung und ein Verfahren zum Durchführen eines RTM-Verfahrens beschrieben, wobei die Vorrichtung eine Injektionsanlage und ein mit einem Formenhohlraum versehenes schließbares Werkzeug aufweist und die Injektionsanlage an das Werkzeug gekoppelt ist, derart, dass ein Injektionsharz in das Werkzeug einbringbar ist, wobei das Werkzeug wenigstens einen mittels einer Schließeinrichtung schließbaren und mit dem Formenhohlraum verbundenen Harzausgang aufweist, aus welchem nach dem Füllen der Form Injektionsharz austreten kann. Mit einer Prozesssensorik ist das Faserverbundbauteil während des Herstellungsprozesses überwachbar, wobei die Prozesssensorik steuernd mit der Prozessstelleinrichtung gekoppelt ist. In dem Werkzeug ist in einem transparenten Bereich eine Kamera vorgesehen, die ein Bild des entstehenden Faserverbundbauteils aufnimmt. Mit entsprechenden Sensoren werden weiterhin der Druck und die Temperatur im Werkzeug erfasst. Weiterhin ist ein Mischkopf vorgesehen, in welchem die Komponenten unmittelbar vor deren Injizieren gemischt werden. Bei dieser Lösung ist keine Möglichkeit vorhanden, den Harzaustritt aus der Form zu erkennen, wenn diese gefüllt ist. Aus der Druckschrift DE 19922850 C1 ist eine Vorrichtung zur Herstellung von Bauelementen aus Faserverbundwerkstoffen bekannt, wobei eine Form mit Anschlussmitteln zur Injektion eines Harzes und zur Drucksenke versehen ist, bestehend aus zusammenwirkenden Formteilen, wobei zumindest ein Formteil formbeständig entsprechend der Kontur der äußeren Oberfläche des Bauteils ausgebildet ist und zwischen den zusammenwirkenden Formteilen eine Fasergelegegarnitur einlegbar ist. Das Unterteil der Form ist die Eintrittseinrichtung des Harzes, wozu entsprechende Kanäle vorgesehen sind. An jedem Kanal ist eingangsseitig und ausgangsseitig ein Anschlussmittel in Form eines Durchflussventils vorgesehen, welches mit einer Steuerung mittels Steuerleitungen verbunden ist. Damit kann eine einzelne Leitung geöffnet oder geschlossen werden aber es ist ebenfalls nicht möglich, den Harzaustritt aus der Form entsprechend zu dedektieren.

Ein Werkzeug für ein Resin-Transfer-Moulding-Verfahren, welches einen Hohlraum, eine Harzfalle und einen Übergangsbereich aufweist. wobei der Hohlraum derart eingerichtet ist, dass in ihm ein Bauteil aufnehmbar ist, wird in DE 10 2005 053 691 A1 beschrieben. Dabei ist die Harzfalle in das Werkzeug integriert und der Übergangsbereich derart eingerichtet, dass mittels ihm eine Verbindung zwischen dem Hohlraum und der Harzfalle herstellbar ist. Zwischen der Harzfalle und dem Hohlraum ist ein Harzschlauch vorgesehen, der mittels eines Absperrhahns verschließbar ist. Auch bei dieser Lösung sind keine zusätzlichen Mittel zur Erfassung des Harzaustritts aus dem Hohlraum vorhanden,

In der Druckschrift GB 944955 wird eine Lösung zur Herstellung von verstärkten Kunststoffstrukturen beschrieben, bei welcher das Werkzeug einen Formenhohlraum aufweist, an welchen sich ausgangsseitig eine Leitung mit einer Falle für das Injizierte und aus der Form ausgetretene Material befindet. Nach der Falle ist ein Absperrventil angeordnet.

Ähnlich ist die Lösung nach US 5,403,537 A aufgebaut, bei welcher auch ausgangsseitig eine Harzfalle und ein Absperrventil vorgesehen sind. Das Ventil befindet sich jedoch zwischen dem Werkzeug und der Harzfalle.

Ein Wesentlicher Nachteil der beiden vorganannten Lösungen besteht ebenfalls darin, dass der Harzaustritt nach dem Werkzeug nicht unmittelbar erfassbar ist. Nachteilig bei den vorgenannten Lösungen ist somit, dass nicht einfach und sicher erfassbar ist (auch nicht über die Messung des Druckanstieges), wenn das Werkzeug mit dem injizierten Material gefüllt ist und Harz aus dem Formenhohlraum austritt.

Aufgabe der Erfindung ist es, eine Vorrichtung zur Durchführung eines Resin-Transfer-Moulding- (RTM) Verfahrens und ein RTM-Verfahren zur Herstellung von insbesondere Integralbauteilen zu entwickeln, mit der auf einfache Art und Weise signalisierbar ist, dass der Formenhohlraum vollständig mit Injektionsmaterial gefüllt ist und die darüber hinaus gewährleistet, dass aus dem Formenhohlraum austretendes Material der Wiederverwendung zugeführt wird.

Diese Aufgabe wird mit den Merkmalen des 1. und 7. Patentanspruchs gelöst. Vorteilhafte Ausgestaltungen ergeben sich aus den Unteransprüchen.

Dazu weist die erfindungsgemäße Vorrichtung eine Injektionsanlage und ein mit einem Formenhohlraum versehenes schließbares Werkzeug auf, wobei die Injektionsanlage an das Werkzeug gekoppelt ist, derart, dass ein Injektionsharz in das Werkzeug einbringbar ist und wobei das Werkzeug wenigstens einen mittels einer Harzflussschließeinheit schließbaren und mit dem Formenhohlraum verbundenen Harzausgang aufweist, aus welchem nach dem Füllen der Form Injektionsharz austreten kann und an oder nach dem Formausgang eine den austretenden Harzfluss detektierende Messeinheit angeordnet ist, welche mit der Harzflussschließeinheit gekoppelt ist, derart, dass bei Detektierung von Harzfluss mittels der Messeinheit die Harzflussschließeinheit schließt.

Die Anordnung der Messeinheit zur Detektierung des Harzflusses an dem Harzausgang oder danach ist dabei sehr einfach und kostengünstig realisierbar, da diese nicht unmittelbar in das Werkzeug integriert werden muss.

Bei Erfassung von austretendem Injektionsharz mittels der Messeinheit wird ein entsprechendes Signal zum Schließen der Harzflussschließeinheit insbesondere über eine Steuerung ausgegeben, wodurch die Harzflussschließeinheit schließbar ist und somit den weiteren Harzaustritt aus dem Formenhohlraum stoppt.

Insbesondere weist die Vorrichtung einen sich an den Harzausgang des Werkzeuges anschließenden Kunststoffschlauch auf, durch welchen aus dem Harzausgang austretendes Injektionsharz fließt, wobei die Messeinheit den Harzfluss durch den Kunststoffschlauch detektiert und dazu insbesondere als kapazitive Messeinheit zur Harzflusserkennung ausgebildet ist.

Vorzugsweise ist der Kunststoffschlauch zumindest bereichsweise durchsichtig ausgebildet und die Messeinheit in Form einer an dem durchsichtigen Bereich angeordneten optischen Messeinheit/Sensor oder kapazitiven Messeinheit/Sensor zur Harzflusserkennung ausgebildet.

Die Harzflussschließeinheit zum Unterbrechen des Harzflusses ist insbesondere ein Ventil, z.B. ein pneumatisch gesteuertes RS-Ventil.

Der Kunststoffschlauch, der mit dem Harzausgang des Werkzeuges verbunden ist, führt zu einem Auffangbehälter für das aus der Form ausgetretene Injektionsharz, der bevorzugt lösbar (z.B. durch eine Klemmverbindung) mit dem Schlauch verbunden ist.

Vorteilhafter Weise ist der Auffangbehälter als Einweg-Auffangbehälter ausgebildet, welcher nach dem Aushärten des Injektionsharzes abnehmbar und gemeinsam mit dem aufgefangenen Harz einer thermischen Verwertung/Wiederverwertung zuführbar ist.

Der Druck im Formenhohlraum ist mittels einer oder mehrerer Drucksensoren erfassbar, wobei bei Überschreiten eines vorgegebenen Drucks die durch das Signal der Messeinheit geschlossene Harzflussschließeinheit wieder öffnet, so dass eine Beschädigung des Werkzeuges oder eine Beeinträchtigung der Qualität des herzustellenden Bauteils durch einen zu hohen Druck vermieden wird.

Wenn die Harzflussschließeinheit mit Überschreiten eines vorgegebenen Druckes im Formenhohlraum geöffnet wird, ist die Messeinheit zur Detektierung des Harzflusses deaktiviert, um zu verhindern, dass diese wiederum ein Signal zum Schließen der Harzflussschließeinheit auslöst, wenn zum gewünschten Druckabbau weiteres Harz durch den Harzausgang bzw. die daran angeschlossene Leitung strömt.

Nach dem Absinken des Druckes unter den vorgegebenen Maximaldruck wird die Harzflussschließeinheit in Form des Ventils wieder geschlossen.

Die Form weist eine der Gestaltung der Integralbauteile entsprechende Anzahl von Harzausgängen auf, die bevorzugt jeweils an der höchsten Position des Formenhohlraumes angebunden sind. Jedem Harzausgang bzw. der sich an dieser anschließenden Leitung ist eine entsprechende Messeinrichtung zur Detektierung des Harzflusses sowie eine Harzflussschließeinheit zugeordnet. Es können alle Leitungen in einen gemeinsamen Auffangbehälter führen oder auch an jeder Leitung bzw. jedem Schlauch ein separater Auffangbehälter angeschlossen sein.

Die Vorrichtung weist weiterhin eine an das Werkzeug gekoppelte Injektionsanlage mit eine Mischeinheit (Mischkopf) für ein Harz und einen Härter zum Injektionsharz auf, die an das Werkzeug anschließbar ist und über zwei Zuführschläuche aus zwei Lagerbehältern mittels jeweils einer separaten Motor-Pumpen-Einheit mit den beiden zu mischenden Komponenten versorgt wird, wobei der Mischkopf eine Erwärmungseinrichtung zum Erwärmen und eine Mischeinrichtung zum Mischen der beiden Komponenten aufweist. Dabei ist von Vorteil, dass bei Überschreiten eines vorgegebenen Drucks im Formenhohlraum das Fördervolumen der zu mischenden Komponenten verringert wird.

Weiterhin sind parallel zu den Zuführschläuchen Abführschläuche vorgesehen, die eine Rückführung/Rezirkulation der ungemischten Komponenten in ihre Lagerbehälter realisieren.

Zur Herstellung von Integralbauteilen wird vor dem Injizieren des Injektionsharzes eine Preform in dem Formenhohlraum angeordnet.

Das Verfahren in Form des Resin-Transfer-Moulding- (RTM) Verfahrens zur Herstellung von insbesondere Integralbauteilen wird unter Verwendung einer Injektionseinheit und eines mit einem Formenhohlraum versehenen schließbaren Werkzeuges an welches die Injektionseinheit koppelbar ist durchgeführt, wobei ein Injektionsharz in das Werkzeug einbringbar ist und das Werkzeug wenigstens einen mittels einer Harzflussschließeinheit schließbaren und mit dem Formenhohlraum verbundenen Harzausgang aufweist, aus welchem nach dem Füllen der Form Injektionsharz austreten kann, wobei an oder nach dem Harzausgang eine den austretenden Harzfluss detektierende Messeinheit angeordnet ist, welche mit der Harzflussschließeinheit gekoppelt ist und dass bei Detektierung von Harzfluss mittels der Messeinheit über eine Steuerung an die Harzflussschließeinheit (5) ein Signal zum Schließen der Harzflussschließeinheit ausgegeben wird und diese geschlossen und der aus dem Werkzeug austretende Harzfluss unterbrochen wird.

Vorteilhafter Weise wird der im Formenhohlraum während des RTM-Verfahrens auftretende Druck mittels wenigstens eines Drucksensors erfasst und bei Überschreiten eines vorgegebenen Drucks die durch das Signal der Messeinheit/des Sensors geschlossene Harzflussschließeinheit wieder geöffnet.
Bei dem Öffnen der Harzflussschließeinheit bei Überschreiten eines vorgegebenen Maximaldruckes im Formenhohlraum erfolgt dabei eine Deaktivierung der Messeinheit zur Detektierung des Harzflusses und die Harzflussschließeinheit schließt nach dem Absinken des Druckes unter den vorgegebenen Maximaldruck wieder.

Es ist ebenfalls möglich. bei Überschreiten eines vorgegebenen Drucks im Formenhohlraum das Fördervolumen der zu mischenden Komponenten zu verringern.

Mit dem Verfahren können unterschiedliche Verarbeitungsmodi mit unterschiedlichen Automatisierungsstufen erfolgen.
In einem manuellen/automatischen Modus wird das erste Schließen der (Harzflussschließeinheit) durch das Erkennen des/der Sensors/en des Harzes beim Austritt aus dem Harzausgang/gängen ausgelöst und bei Beginn eines Spülvorganges im weiteren Injektionsprozess wird der Öffnen und Schließen-Prozess der Harzflussschließeinheit von der Steuerung als eine zeitliche Abfolge des Zustandes auf/zu (0,1) aller angeschlossenen Harzflussschließeinheiten bis zum Injektionsprozessende erfasst und gespeichert, wobei die Steuerung auditive und/oder visuelle Warnungen ausgibt, falls die Druckparameter sich über den vorgegebenen Grenzwerten befinden.
In einem teildynamischen Prozess erfolgt die in einem manuellen Prozess erfasste und aufgezeichnete Routine als ein zeitlicher erfasster Prozess des Öffnens und Schließens der pneumatischen Ventile der RS-Ventileinheit (Harzflussschließeinheit), wobei Routine des teildynamischen Prozesses in einem automatischen Modus als Datei zur Verfügung steht und von der Software beim Starten des Automatikmodus eingelesen und zum entsprechenden Zeitpunkt im Injektionsprozess gestartet und ausgeführt wird.
Dabei ist es möglich, dass der automatische Prozess unter Mitberücksichtigung des sich verändemden/zunehmenden Drucks in der Kavität im zeitlichen Verlauf des Injekionsprozesses erfolgt, wobei die Steuerung die Ventile (Harzflussschließeinheit), an denen Druckgrenzwertüberschreitungen auftreten solange öffnet bis die Grenzwerte wieder unterschritten sind.

Damit kann ein Lernprozess von dem manuellen Prozess bis zum automatischen Prozess realisiert werden.

Mir der Erfindung wird eine einfache und sichere Vorrichtung für das RTM-Verfahren geschaffen, mit welcher erkennbar ist, dass der Formenhohlraum vollständig gefüllt ist, die eine Überbeanspruchung des Werkzeuges und des herzustellenden Bauteiles durch einen zu hohen Druck im Werkzeug verhindert und mit welcher überschüssiges, aus dem Werkzeug ausgetretenen, Harz einer Wiederverwendung zugeführt werden kann bzw. bei Störungen sich im System befindliche ungemischte Komponenten wieder rückführbar sind, z.B. in ihre Lagerbehälter oder andere Auffangbehälter.

Die Erfindung wird nachfolgend anhand von Ausführungsbeispielen und zugehörigen Zeichnungen näher erläutert. Es zeigen:
- Figur 1: die Prinzipdarstellung der gesamten Vorrichtung zur Durchführung des RTM-Verfahrens,
- Figur 2: dreidimensionale Darstellung einer Injektionseinheit 10,
- Figur 3: das Werkzeug mit den zugehörigen Messmitteln, der Schließeinheit und der Steuerung als Prinzipdarstellung.

Die erfindungsgemäße Vorrichtung weist jeweils eine Injektionseinheit 10 mit einem Vorratsbehälter 103/105 für Harz und Härter und einen Mischkopf 111 für das Zusammenführen dieser Komponenten auf. An dem Mischkopf 111 ist eine Düse 113 befestigt, über welche das Harz-Härtergemisch dem hier nicht sichtbaren Formenhohlraum des Werkzeuges W zuführbar ist. Der Mischkopf 111 und/oder die Düse 113 können als Wegwerfteil ausgebildet sein. Um eine Flexibilität und Variabilität in der Anwendung der RTM-Anlage zu haben, werden das Harz und der Härter in separaten Schläuchen eines Schlauchpaketes 107 aus den Vorratsbehältern 105/103 zum Mischkopf 111 befördert. Die dafür verwendete geteilte Motor-Pumpeneinheit 117/119 ist auf das verwendete Harz-/Härtergemisch ausgelegt und dimensioniert. Die Auslegung und Dimensionierung erfolgt insbesondere anhand der Viskosität und des gewünschten Fördervolumens. Es ist jeweils eine Motor-Pumpeneinheit 117 dem Vorratsbehälter 103 für das Harz und die andere Motor-Pumpeneinheit 119 dem Vorratsbehälter 105 für den Härter zugeordnet. Das angeschlossene Schlauchpaket 107 umfasst zwei separate Schläuche.

Die Vorrichtung weist einen Schaltschrank 115 mit der hier nicht dargestellten Steuerungs-/Bedieneinheit sowie einen Auslegerarm 109 für die Befestigung des Schlauchpakets 107 auf, an welchem der Mischkopf 111 lösbar befestigt ist. Über den drehbaren Auslegearm 109 ist die Das Werkzeug W zu erreichen. Die Motor-Pumpeneinheit 117/119 fördert den Härter und das Harz aus den Vorratsbehältern 103/105, die in einem gemeinsamen Behältnis 101 ausgebildet sind, über das Schlauchpaket 107 zum Mischkopf 111. Im Mischkopf 111 (bevorzugt Zweikammermischkopf) werden Harz und Härter gemischt und erwärmt über die Düse 113 aus der vorgenannt beschriebenen Injektionseinheit 10 dem Werkzeug W zugeführt. Das Werkzeug W besitzt je nach Art des herzustellenden Bauteils und des entsprechend gestalteten Formenhohlraumes (hier nicht dargestellt) ein oder mehrere Harzausgänge, wobei hier ein Harzausgang 3 angedeutet ist. An den Harzausgang 3 schließt sich eine Leitung, hier ein Kunststoffschlauch 9 an, der zumindest in einem Bereich 9.1, der bevorzugt unmittelbar hinter dem Harzausgang 3 des Werkzeuges W angeordnet ist, durchsichtig ist. Außen an dem durchsichtigen Bereich ist ein Sensor 4 angeordnet, der erkennt, wenn in den Schlauch 9 Harz strömt. Nach dem Sensor 4 ist eine Harzflussschließeinheit 5 in Form eines pneumatisch gesteuerten RS-Ventils vorgesehen. Der Schlauch 9 mündet in einen Auffangbehälter 12, der mit dem darin gesammelten Material einer Wiederverwertung zuführbar ist.

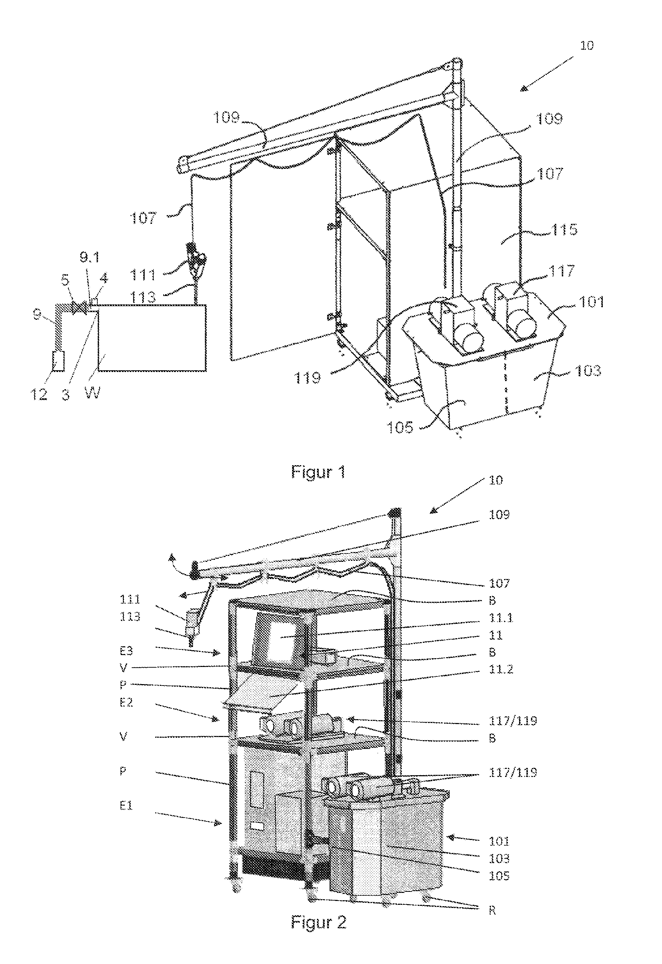

Eine Variante einer Injektionseinheit 10 ist in Figur 2 dargestellt. Diese ist modular aufgebaut und weist anstelle eines herkömmlichen Schaltschrankes ein Regal mit hier drei Ebenen E1, E3, E3 auf. Seitlich zum Regal ist das Behältnis 101 mit den Vorratsbehältern 103/105 beigestellt, welches bevorzugt mit einer Füllstandüberwachung versehen ist und welches an seiner Oberseite die Motor-Pumpeneinheit 117/119 aufweist.

In der ersten (unteren) Ebene E1 befindet sich die nicht näher bezeichnete Heizeinheit zum bevorzugt elektrischen Erwärmen der in den Vorratsbehältern 103, 105 befindlichen Komponenten. Die zweite (mittlere) Ebene E2 dient zur Lagerung von Komponenten bzw. Ersatzteilen, z.B. einer weiteren Motor-Pumpeneinheit 117/119, die ggf. eine andere technische Konfiguration je nach Harzsystem und Injektionsvolumen aufweist.
Es ist möglich, die Motor-Pumpeneinheit 117/119 geteilt auszuführen und den Motor und die Pumpe mittels einer Schnellkupplung zu verbinden.
In der dritten (oberen) Ebene E3 ist die Bedieneinheit angeordnet, die die Steuerung 11 und einen Bildschirm 11.1 aufweist. Weiterhin ist ein bevorzugt ausziehbares Schreibpult 11.2 vorgesehen. Von den Vorratsbehältern 103, 105 führen wie in Figur 1 separate Schläuche eines Schlauchpaketes 107, die an einen schwenkbaren Ausleger 109 aufgenommen sind, zu einem vorzugsweise beheizbarem Mischkopf 111, der eine Düse 113 aufweist. Das Regal ist im Wesentlichen aus Profilstäben P, Verbindungsprofilen V und Regalböden B zusammengesetzt und weist (ebenso wie das Behältnis 101) an seiner Unterseite Rollen R auf. Selbstverständlich kann das Regal erweitert bzw. auch mit einer Umhausung bzw. mit Seitenwänden versehen werden.
Die Profilstäbe P des Regals bestehen insbesondere aus einem stabartigen Kunststoff-Multiprofil, welches einen Kern aus geschäumten Kunststoffmaterial aufweist, der mit einem Mantel aus faserverstärktem Kunststoff (bevorzugt Carbon-Fasermaterial) versehen ist. An den Verbindungspositionen zu den Verbindungsprofilen V weisen die Profilstäbe P Hartpunkte (z.B. in Form von Metalleinsätzen) auf.
Durch die Verwendung derartiger Profilstäbe P, die auf einfache Art und Weise mittels der Verbindungsprofile V und unter Verwendung der Regalböden B zu dem Regal zusammensetzbar sind, wird ein einfacher, leichter und dennoch stabiler Aufbau gewährleistet, der dadurch erhebliche Vorteile zu einem herkömmlichen Schaltschank bietet.

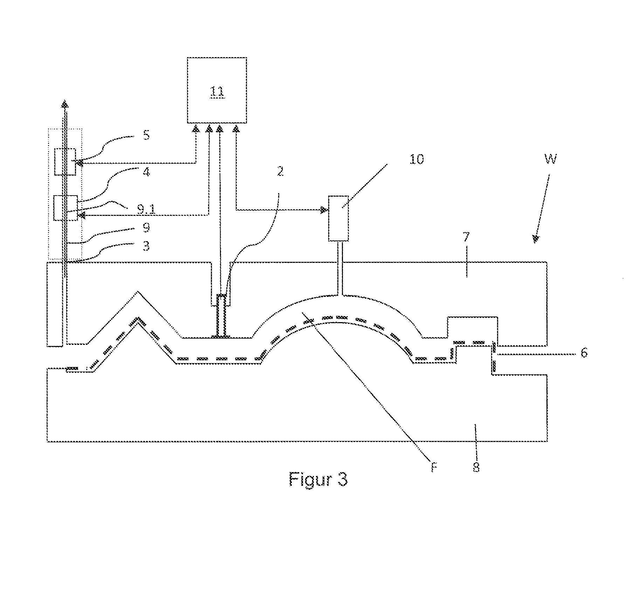

Figur 3 zeigt das zweigeteilte Werkzeug W, welches eine obere Werkzeugformhälfte 7 und eine untere Werkzeugformhälfte 8 aufweist, zwischen welchen im geschlossenen Zustand ein Formenhohlraum F ausgebildet ist. In den Formenhohlraum F wurde hier ein Preformling 6 (Vorform bzw. Einlegeteil) (gestrichelt dargestellt) eingelegt.
In der oberen Werkzeugformhälfte 7 ist ein Drucksensor 2 angeordnet, der bis an den Formenhohlraum F reicht und mit dem der beim Injizieren auftretende Druck erfassbar ist.

Es ist aus Figur 2 ebenfalls eine Steigleitung bzw. ein Steigrohr (nicht bezeichnet) ersichtlich, welches einen Harzausgang 3 aus dem Werkzeug W aufweist. An den Harzausgang 3 schließt sich die Leitung 9 an, welche in Flussrichtung des Zweikomponentenmediums in Form eines Harz/Härtergemisches zuerst mit einem Sensor 4 und dann mit einer Harzflussschließeinheit 5 versehen ist.

Über die Steuerung 11 der Injektionseinheit 10, die bevorzugt mit einer Bedieneinheit gekoppelt ist, werden die erforderlichen Prozessdaten eingegeben, z.B. die im Mischkopf zu erzeugende Temperatur, das Fördervolumen der Motor-Pumpeneinheit 117,119 (s. Fig. 1), der zulässige Druck im Formenhohlraum F usw.
Zur Herstellung eines Faserverbundbauteils wird der Preformling 6 in das geöffnete Werkzeug W eingelegt und dessen Werkzeughälften 7, 8 geschlossen. Nun wird über die Injektionseinheit 10 dem geschlossenen Formenhohlraum F des Werkzeuges W aus der Injektionseinheit 10 das Harz-Härtergemisch zugeführt. Ist der Formenhohlraum F gefüllt, steigt das Harz-Härtergemisch durch die Steigleitung nach oben und fließt aus dem Werkzeug W durch den Harzausgang 3 in den durchsichtigen Bereich 9.1 des an den Harzausgang anschließenden Schlauches 9. Der an diesem Bereich 9.1 angeordnete Sensor 4 detektiert den Harzfluss und gibt ein entsprechendes Signal an die Steuereinheit 11, die wiederum ein Signal an die Harzflussschließeinheit 4 zum Schließen des Ventils weiterleitet. Über den Drucksensor 2 wird während des Injektionsvorganges der Druck im Formenhohlraum F erfasst und an die Steuereinheit/Steuerung 11 ausgegeben. Wird der vorgegebene zulässige Maximaldruck überschritten, wird über die Steuerung 11 an die Harzflussschließeinheit 5 ein Signal zum Öffnen weitergeleitet und/oder das Fördervolumen verringert.
Mit dem Schlauch 9 ist ein in Figur 3 nicht dargestellter Auffangbehälter verbunden, dessen Funktion bereits vorgenannt beschrieben wurde.

Neben dem vorgenannten Ausführungsbeispiel ist es auch möglich, die Medien nicht im Mischkopf 111, sondern in ihren Behältern 103/105 über eine entsprechende Heizeinheit (nicht dargestellt) zu erwärmen und in dem Mischkopf 111 nur zu mischen und auf einer bestimmten Temperatur zu halten.
Es ist möglich, mit der Steuerung 11 eine Datenerfassung für die Qualitätssicherung durchzuführen, insbesondere unter Verwendung einer Temperatur- und Drucksensorik. Insbesondere erfolgt über eine PC-Steuerung eine PC geregelte Dosierung der Medien über die Drehzahlsteuerung der Motoren an den Dosierpumpen.
Es ist eine hohe Reproduzierbarkeit der zu fertigenden Produkte gesichert und das Mischungsverhältnis und die Injektionsgeschwindigkeit der Medien beliebig einstellbar. Eine flexible Verwendung von unterschiedlichen Harzsystemen, die unterschiedliche Mischungsverhältnisse verlangen, ist möglich.
Bei Druckabweichungen außerhalb der programmierten Vorgaben (Grenzwertüberschreitung) in der Kavität (Formenhohlraum) des Werkzeuges wird entsprechend das Fördervolumen angepasst bzw. die Medien in das Rezirkulationssystem umgeleitet. Bei Störfällen oder Werkzeugwechseln ist ein zweites nicht dargestelltes Leitungssystem vorgesehen, welches durch pneumatische Kugelhähne angesteuert wird. So ist eine Rezirkulation möglich, d.h. die Medien werden noch vor dem Mischvorgang wieder in ihre Lagerbehälter gefördert.

Bevorzugt werden zwei (steuerungs) Varianten der erfindungsgemäßen Lösung umgesetzt:
1. Variante - zeitlich erfasste und ausgeführte Variante des Spülvorgangs:
   Im manuellen/automatischen Modus wird das erste Schließen der pneumatischen Ventile der RS-Ventileinheit (Harzflussschließeinheit 5) durch das "Erkennen" der kapazitiven Sensoren des Harz-Härtergemisches beim Austritt an den Werkzeugausgängen ausgelöst. Beginnt der Bediener im weiteren Injektionsprozess dann den Spülvorgang (Öffnen und Schließen-Prozess der pneumatischen Ventile) wird von der Steuerung 11 eine zeitliche Abfolge des Zustandes (0,1) aller angeschlossenen pneumatischen Ventile bis zum Injektionsprozessende mitgeschrieben und gespeichert. Der Bediener bedarf sich der Druckanzeigen in den Teilbereichen des Werkzeuges zur Unterstützung, wann und welches Pneumatikventil der Bediener öffnet bzw. schließt. Beim Ausführen der beiden Modi gibt die Steuerung 11 auditive und visuelle Warnungen aus, falls die Druckparameter sich über den vorgegebenen

Grenzwerten befinden. Der Anwender kann auf diese Warnungen entsprechenden Einfluss nehmen.

Im manuellen Modus erfolgt somit das Öffnen/ Schließen der Harzflussschließeinheit 5 mit dem zeitlichen erfassen und speichern der erfolgten Operationen.

Bei einem teildynamischen Prozess ist diese mitgeschriebene Routine ein rein zeitlicher erfasster Prozess des Öffnens und Schließens der pneumatischen Ventile der RS-Ventileinheit (Harzflussschließeinheit 5). Die Routine steht dem Anwender dann im automatischen Modus als Datei zur Verfügung und wird von der Software beim Starten des Automatikmodus eingelesen und zum entsprechenden Zeitpunkt im Injektionsprozess gestartet und ausgeführt.
Beim Ablauf des Injektionsprozess im Automatikmodus ist es nicht entscheidend an welchen Ausgängen das Gemisch zuerst austritt und der erste Schließimpuls ausgelöst wird.

Im automatischen Modus erfolgt das Öffnen/ Schließen durch das zeitliche aufrufen und ausführen der Operationen.

Die Variante 1 deckt sowohl im manuellen als auch im teildynamischen Prozess die meisten "Veränderungen" während des Herstellens von Faserverbundbauteilen ab. Solche kleinen Veränderungen im Herstellprozess können die Wiederholgenauigkeit der Bauteile beeinflussen. Unter Veränderung versteht man z.B. die Toleranzen (Bauteilabmessungen, Materialeigenschaften, Lagenzuschnitte, Mitarbeiter,) die von Bauteil zu Bauteil auftreten.

Um aber noch sensibler auf die Wiederholgenauigkeit der Bauteilproduktion im Injektionsprozess Einfluss zu nehmen wurde eine zweite Variante entrwickelt, die nachfolgend beschrieben wird.

Die 2. Variante basiert auf der ersten Variante bzgl. der Erfassung/Speicherung der "Öffnen und Schließen"-Routine im manuellen Modus.
In der Ausführung des Spülvorganges im Automatikmodus erweitert sich die Variante 2. bezüglich der Mitberücksichtigung des verändemden/zunehmenden Drucks in der Kavität im zeitlichen Verlauf des Injekionsprozesses.

Das bedeutet die Steuerung nimmt selbstständig Einfluss auf den dynamischen Injektionsprozess und vergleicht den aktuellen Innendruckzustand mit den vorgegebenen Druckrahmenparametern, die im manuellen Modus festgelegt und abgespeichert wurden. Die Steuerung öffnet die Ventile (Harzflussschließeinheit 5), an denen Druckgrenzwertüberschreitungen auftreten solange bis die Grenzwerte wieder unterschritten sind.

Der Injektionsprozess wird um die gering abweichende Routine des einzelnen Ventils verlängert, um zu gewährleisten dass auch eine ausreichende Menge des Mediums in die Kavität injiziert wird. Der Prozess läuft somit volldynamisch ab.

Insgesamt ist es für die Herstellung qualitativ hochwertiger Bauteile erforderlich eine bauteilspezifizierte "Öffnen & Schließen"-Routine beim RTM-Prozess durchzuführen, was durch die erfindungsgemäße Lösung möglich ist.

Aufgrund der unterschiedlicher Materialien in einem Integralbauteil und der damit verbundenen möglichen Veränderungen im Herstellprozess von Bauteil zu Bauteil wird mit dem Ziel eine hohe Wiedeholgenauigkeit und die optimalste Bauteilqualität zu erzielen der "RTM-Robot" so ausgelegt, diese Veränderungen auszugleichen. Solche Veränderungen können entscheidenden Einfluss auf die Bauteilqualität (z.B. Oberflächengüte), Festigkeit (Vernetzung der Materialien) und den Nacharbeitsaufwand (z.B. evtl. Lackierarbeiten) des Produktes haben.
Der Ausgleich solcher nicht bzw. schwer beeinflussbarer Prozessteile (z.B. Materialdichte eines Schaumkerns, Abweichung in den Verstärkungslagen) ergibt die geforderte Homogenität des Bauteils und macht den Weg frei für den Einsatz in hochbeanspruchten Einsatzgebieten. Die Faser- und Harzhomogenität eines Intergralbauteils kann nur mit einer bauteilspezifizierten Injektionsroutine erreicht werden, die auf der zuverlässigen Erkennung des Harzaustritts aus dem Formenhohlraum basiert, ggf. in Verbindung mit den auftretenden Drücken im Formenhohlraum über eine entsprechende Steuerung.

Selbstverständlich ist es auch möglich, den Leitungsabschnitt, an welchem der Sensor zur Detektierung des Harzflusses angeordnet ist vollständig oder teilweise in das Werkzeug zu integrieren. Bevorzugt wird dieser jedoch außerhalb des Werkzeuges unmittelbar nach dem Harzaustritt des Werkzeuges angeordnet.

### Bezugszeichenliste

- 2: Drucksensor
- 3: Harzausgang
- 4: Sensor
- 5: Harzflussschließeinheit
- 6: Preformling
- 7: obere Werkzeugformhälfte
- 8: untere Werkzeugformhälfte
- 9: Kunststoffschlauch
- 9.1: durchsichtiger Bereich
- 10: Injektionseinheit
- 11: Steuerung
- 11.1: Bildschirm
- 11.2: Schreibpult
- 12: Auffangbehälter
- 101: Behältnis
- 103: Vorratsbehälter für Harz
- 105: Vorratsbehälter für Härter
- 109: Auslegerarm
- 111: Mischkopf
- 107: Schlauchpaket
- 113: Düse
- 115: Schaltschrank
- 117/119: Motor-Pumpeneinheit
- B: Regalboden
- E1: erste Ebene
- E2: zweite Ebene
- E3: dritte Ebene
- F: Formenhohlraum
- P: Profilstäbe
- R: Rollen
- V: Verbindungsprofile
- W: Werkzeug

## Patentansprüche

1. Vorrichtung zur Durchführung eines Resin-Transfer-Moulding- (RTM) Verfahrens zur Herstellung von insbesondere Integralbauteilen, wobei die Vorrichtung eine Injektionseinheit (10) und ein mit einem Formenhohlraum (F) versehenes schließbares Werkzeug (W) aufweist und die Injektionseinheit (10) an das Werkzeug (W) koppelbar ist, derart, dass ein Injektionsharz in das Werkzeug (W) einbringbar ist, wobei das Werkzeug (W) wenigstens einen mittels einer Harzflussschließeinheit (5) schließbaren und mit dem Formenhohlraum (F) verbundenen Harzausgang (3) aufweist, aus welchem nach dem Füllen der Form Injektionsharz austreten kann, wobei an oder nach dem Harzausgang eine den austretenden Harzfluss detektierende Messeinheit angeordnet ist, welche mit der Harzflussschließeinheit (5) gekoppelt ist, derart, dass bei Detektierung von Harzfluss mittels der Messeinheit die Harzflussschließeinheit (5) schließt, **dadurch gekennzeichnet, dass** im Formenhohlraum (F) ein oder mehrere Drucksensoren (2) angeordnet sind, mit denen ein während des RTM-Verfahrens auftretender Druck erfassbar ist und dass bei Überschreiten eines vorgegebenen Drucks die durch das Signal der Messeinheit geschlossene Harzflussschließeinheit (5) wieder öffnet.

2. Vorrichtung nach Anspruch 1, **dadurch gekennzeichnet, dass** das Werkzeug (W) einen sich an den Harzausgang (3) anschließenden Kunststoffschlauch (9) oder eine anderweitig ausgebildete Leitung aufweist, durch welchen aus dem Werkzeug (W) austretendes Injektionsharz fließt und dass die Messeinheit den Harzfluss durch den Kunststoffschlauch (9) oder die Leitung detektiert

3. Vorrichtung nach Anspruch 1 oder 2, **dadurch gekennzeichnet, dass** der Kunststoffschlauch (9) oder die Leitung zumindest bereichsweise durchsichtig ist und dass die Messeinheit in Form eines an dem durchsichtigen Bereich angeordneten Sensors (4) ausgebildet ist und dass der Sensor ein optischer Sensors oder ein kapazitiver Sensor zur Harzflusserkennung ausgebildet ist.

4. Vorrichtung nach einem der Ansprüche 1 bis 3, **dadurch gekennzeichnet, dass** die Harzflussschließeinheit (5) ein Ventil zum Unterbrechen des Harzflusses in Form eines pneumatisch gesteuerten RS-Ventils ist.

5. Vorrichtung nach einem der Ansprüche 1 bis 4, **dadurch gekennzeichnet, dass** das Werkzeug (W) eine der Gestaltung der herzustellenden Integralbauteile entsprechende Anzahl von Harzausgängen (3) aufweist und dass zumindest einem, mehreren oder allen Harzausgängen (3) eine Messeinrichtung/ein Sensor (4) und eine Harzflussschließeinheit (4) zugeordnet ist und dass der Druck im Formenhohlraum (F) mittels einer oder mehrerer Drucksensoren (2) erfassbar ist.

6. Vorrichtung nach einem der Ansprüche 1 bis 5, **dadurch gekennzeichnet, dass** die an das Werkzeug (W) gekoppelte Injektionseinheit (10) einen Mischkopf (111) für ein Harz und einen Härter zum Injektionsharz aufweist, der an das Werkzeug (W) anschließbar ist und über zwei Zuführschläuche aus zwei Vorratsbehältern (103, 105) mittels jeweils einer separaten Motor-Pumpen-Einheit (117/119) mit den beiden zu mischenden Komponenten versorgt wird und dass der Mischkopf (111) eine Erwärmungseinrichtung zum Erwärmen und eine Mischeinrichtung zum Mischen der beiden Komponenten aufweist und dass parallel zu den Zuführschläuchen Abführschläuche angeordnet sind, die eine Rückführung/Rezirkulation der ungemischten Komponenten in ihre Vorratsbehälter (103, 105) realisieren.

7. Resin-Transfer-Moulding- (RTM) Verfahren zur Herstellung von insbesondere Integralbauteilen, unter Verwendung einer Injektionseinheit (10) und eines mit einem Formenhohlraum (F) versehenen schließbaren Werkzeuges (W) an welches die Injektionseinheit (10) koppelbar ist, derart, dass ein Injektionsharz in das Werkzeug (W) einbringbar ist, wobei das Werkzeug (W) wenigstens einen mittels einer Harzflussschließeinheit (5) schließbaren und mit dem Formenhohlraum (F) verbundenen Harzausgang (3) aufweist, aus welchem nach dem Füllen der Form Injektionsharz austreten kann, wobei an oder nach dem Harzausgang eine den austretenden Harzfluss detektierende Messeinheit angeordnet ist, welche mit der Harzflussschließeinheit (5) gekoppelt ist und dass bei Detektierung von Harzfluss mittels der Messeinheit über eine Steuerung (11) an die Harzflussschließeinheit (5) ein Signal zum Schließen der Harzflussschließeinheit (5) ausgegeben wird und diese geschlossen und der aus dem Werkzeug (W) austretende Harzfluss unterbrochen wird und dass ein im Formenhohlraum (F) während des RTM-Verfahrens auftretender Druck mittels wenigstens eines Drucksensors (2) erfassbar ist und dass bei Überschreiten eines vorgegebenen Drucks die durch das Signal der Messeinheit/des Sensors (4) geschlossene Harzflussschließeinheit (5) wieder öffnet.

8. Verfahren nach Anspruch 7, **dadurch gekennzeichnet, dass** bei Öffnen der Harzflussschließeinheit (5) mit Überschreiten eines vorgegebenen Maximaldruckes im Formenhohlraum (5) eine Deaktivierung der Messeinheit zur Detektierung des Harzflusses erfolgt. und dass die Harzflussschließeinheit (5) nach dem Absinken des Druckes unter den vorgegebenen Maximaldruck die Harzflussschließeinheit (5) wieder schließt.

9. Verfahren nach Anspruch 7 oder 8, **dadurch gekennzeichnet, dass** bei Überschreiten eines vorgegebenen Drucks im Formenhohlraum (F) das Fördervolumen der zu mischenden Komponenten verringert wird.

10. Verfahren nach einem der Ansprüche 7 bis 9, **dadurch gekennzeichnet, dass**
- in einem manuellen oder automatischen Modus das erste Schließen der Harzflussschließeinheit (5) durch das Erkennen des/der Sensors/en (4) des Harzes beim Austritt aus dem/den Harzausgang/gängen (3) ausgelöst wird und bei Beginn eines Spülvorganges im weiteren Injektionsprozess der Öffnen und Schließen-Prozess der Harzflussschließeinheit (5) von der Steuerung (11) als eine zeitliche Abfolge des Zustandes auf/zu (0,1) aller angeschlossenen Harzflussschließeinheiten (5) bis zum Injektionsprozessende erfasst und gespeichert wird und dass dabei die Steuerung (11) auditive und/oder visuelle Warnungen ausgibt, falls die Druckparameter sich über den vorgegebenen Grenzwerten befinden,
- in einem teildynamischen Prozess die in einem manuellen Prozess erfasste und aufgezeichnete Routine als ein zeitlicher erfasster Prozess des Öffnens und Schließens der pneumatisch gesteuerten RS-Ventile in Form der Harzflussschließeinheit (5) erfolgt und
- die Routine des teildynamischen Prozesses in einem automatischen Modus als Datei zur Verfügung steht und von der Software beim Starten des Automatikmodus eingelesen und zum entsprechenden Zeitpunkt im Injektionsprozess gestartet und ausgeführt wird und dass bedarfsweise der automatische Prozess unter Mitberücksichtigung des verändemden/zunehmenden Drucks in der Kavität im zeitlichen Verlauf des Injekionsprozesses erfolgt, wobei die Steuerung (11) die RS-Ventile öffnet an denen Druckgrenzwertüberschreitungen auftreten solange, bis die Grenzwerte wieder unterschritten sind.

## Claims

1. An apparatus for carrying out a resin-transfer-moulding (RTM) process for producing integral components in particular, wherein the apparatus comprises an injection unit (10) and a closable mould (W) provided with a mould cavity (F), and the injection unit (10) can be coupled to the mould (W) in such a way that an injection resin can be introduced into the mould (W), wherein the mould (W) comprises at least one resin output (3) which is closable by means of a resin-flow closing unit (5) and is connected to the mould cavity (F), from which injection resin can exit after the filling of the mould, wherein a measuring unit is arranged on or after the resin output which detects the exiting resin flow and which is coupled to the resin-flow closing unit (5) in such a way that upon detecting a resin flow by means of the measuring unit the resin-flow closing unit (5) closes, **characterized in that** one or several pressure sensors (2) are arranged in the mould cavity (F), with which a pressure occurring during the RTM process can be measured, and upon exceeding a predetermined pressure the resin-flow closing unit (5) which was closed by the signal of the measuring unit opens again.

2. An apparatus according to claim 1, **characterized in that** the mould (W) comprises a plastic hose (9) connected to the resin output (3) or a line arranged in another way, through which flows injection resin exiting from the mould (W), and the measuring unit detects the resin flow through the plastic hose (9) or the line.

3. An apparatus according to claim 1 or 2, **characterized in that** the plastic hose (9) or the line is transparent at least in sections, and the measuring unit is arranged in form of a sensor (4) arranged on the transparent region, and the sensor is arranged as an optical sensor or a capacitive sensor for recognising the resin flow.

4. An apparatus according to one of the claims 1 to 3, **characterized in that** the resin-flow closing unit (5) is a valve for interrupting the resin flow in form of a pneumatically controlled non-return valve.

5. An apparatus according to one of the claims 1 to 4, **characterized in that** the mould (W) comprises a number of resin outputs (3) which corresponds to the shape of the integral components to be produced, and at least one, several or all resin outputs (3) are associated with a measuring device/sensor (4) and a resin-flow closing unit (5), and the pressure in the mould cavity (F) can be detected by means of one or several pressure sensors (2).

6. An apparatus according to one of the claims 1 to 5, **characterized in that** the injection unit (10) coupled to the mould (W) comprises a mixing head (111) for a resin and a curing agent for the injection resin, which mixing head is connectable to the mould (W) and is supplied via two feed hoses from two storage containers (103, 105) by means of a respective separate motor-pump unit (117/119) with the two components to be mixed, and the mixing head (111) comprises a heating device for heating and a mixing device for mixing the two components, and discharge hoses are arranged parallel to the feed hoses which realise a return/recirculation of the unmixed components to their storage containers (103, 105).

7. A resin-transfer-moulding (RTM) method for producing integral components in particular, by using an injection unit (10) and a closable mould (W) provided with a mould cavity (F), to which the injection unit (10) can be coupled in such a way that an injection resin can be introduced into the mould (W), wherein the mould (W) comprises at least one resin output (3) which is closable by means of a resin-flow closing unit (5) and is connected to the mould cavity (F), from which injection resin can exit after the filling of the mould, wherein a measuring unit is arranged on or after the resin output which detects the exiting resin flow and which is coupled to the resin-flow closing unit (5), and upon detecting a resin flow by means of the measuring unit a signal for closing the resin-flow closing unit (5) is output via a control unit (11) to the resin-flow closing unit (5), and it is closed and the resin flow exiting from the mould (W) is interrupted, and a pressure occurring in the mould cavity (F) during the RTM process can be detected by means of at least one pressure sensor (2), and upon exceeding a predetermined pressure the resin-flow closing unit (5) which was closed by the signal of the measuring unit/sensor (4) is opened again.

8. A method according to claim 7, **characterized in that** a deactivation of the measuring unit for detecting the resin flow occurs during the opening of the resin-flow closing unit (5) in combination with an exceeding of a predetermined maximum pressure in the mould cavity (F), and the resin-flow closing unit (5) closes the resin-flow closing unit (5) again after the decrease of the pressure beneath the predetermined maximum pressure.

9. A method according to claim 7 or 8, **characterized in that** the volumetric delivery of the components to be mixed is reduced upon exceeding a predetermined pressure in the mould cavity (F).

10. A method according to one of the claims 7 to 9, **characterized in that**
- in a manual or automatic mode the first closing of the resin-flow closing unit (5) is triggered by the recognition of the sensor(s) (4) of the resin during exit from the resin output(s) (3), and at the beginning of a scavenging process in the further injection process the opening and closing process of the resin-flow closing unit (5) is detected and stored by the control unit (11) as a time sequence of the state open/closed (0, 1) of all connected resin-flow closing units (5) until the end of the injection process, and the control unit (11) emits auditory and/or visual warnings if the pressure parameters are over the predetermined limit value;
- in a partly dynamic process the routine detected and recorded in a manual process occurs as a time-acquired process of opening and closing of the pneumatically controlled non-return valves in form of the resin-flow closing unit (5) and
- the routine of the partly dynamic process is available in an automatic mode as a file and is read by the software at the start of the automatic mode and is started and carried out at the respective point in time in the injection process, and if required the automatic process occurs by taking into account the varying/increasing pressure in the cavity in the temporal course of the injection process, wherein the control unit (11) opens the non-return valves on which overshootings occur in the pressure limit values for such a time until said values drop beneath the limit values again.

## Revendications

1. Dispositif pour la mise en oeuvre d'un procédé de moulage par transfert de résine (RTM) pour la fabrication, en particulier, de composants intégraux, dans lequel le dispositif comprend une unité d'injection (10) et un outil (W) pouvant être fermé et muni d'une cavité de moulage (F) et l'unité d'injection (10) peut être couplée à l'outil (W), de telle manière qu'une résine d'injection puisse être introduite dans l'outil (W), lequel outil (W) présente au moins une sortie de résine (3) pouvant être fermée au moyen d'une unité d'obturation de l'écoulement de résine (5) et reliée à la cavité de moulage (F), par laquelle de la résine d'injection peut sortir après le remplissage du moule, dans lequel une unité de mesure détectant l'écoulement de résine qui sort est disposée au niveau ou en aval de la sortie de résine et couplée à l'unité d'obturation de l'écoulement de résine (5) de telle manière que lorsque l'écoulement de résine est détecté au moyen de l'unité de mesure, l'unité d'obturation de l'écoulement de résine (5) se ferme, **caractérisé en ce qu'**il est prévu dans la cavité de moulage (F) un ou plusieurs capteurs de pression (2) avec lesquels une pression créée pendant le procédé de moulage par transfert de résine peut être mesurée et **en ce que** lorsqu'une pression prédéterminée est dépassée, l'unité d'obturation de l'écoulement de résine (5) fermée par le signal de l'unité de mesure se rouvre.

2. Dispositif selon la revendication 1, **caractérisé en ce que** l'outil (W) comprend un tuyau en plastique (9) se raccordant à la sortie de résine (3) ou une conduite conformée d'une autre manière par laquelle la résine d'injection sortant de l'outil (W) s'écoule, et **en ce que** l'unité de mesure détecte l'écoulement de résine à travers le tuyau en plastique (9) ou la conduite.

3. Dispositif selon la revendication 1 ou 2, **caractérisé en ce que** le tuyau en plastique (9) ou la conduite sont transparents au moins dans certaines zones et **en ce que** l'unité de mesure est conçue comme un capteur (4) disposé sur la zone transparente et **en ce que** le capteur est un capteur optique ou un capteur capacitif destiné à détecter l'écoulement de la résine.

4. Dispositif selon l'une des revendications 1 à 3, **caractérisé en ce que** l'unité d'obturation de l'écoulement de résine (5) est une valve destinée à interrompre l'écoulement de résine prenant la forme d'une valve antiretour à commande pneumatique.

5. Dispositif selon l'une des revendications 1 à 4, **caractérisé en ce que** l'outil (W) présente un nombre de sorties de résine (3) correspondant à la conformation des composants intégraux à fabriquer et **en ce qu'**au moins une, plusieurs ou toutes les sorties de résine (3) sont associées à un dispositif de mesure/un capteur (4) et à une unité d'obturation de l'écoulement de résine (5) et **en ce que** la pression dans la cavité de moulage (F) est mesurée au moyen d'un ou plusieurs capteurs de pression (2).

6. Dispositif selon l'une des revendications 1 à 5, **caractérisé en ce que** l'unité d'injection (10) couplée à l'outil (W) comprend une tête de mélange (111) pour une résine et un durcisseur donnant la résine d'injection, qui peut être raccordée à l'outil (W) et qui est alimentée avec les deux composants à mélanger via deux tuyaux d'alimentation à partir de deux réservoirs (103, 105) au moyen d'une unité de motopompe (117/119) séparée pour chacun et **en ce que** la tête de mélange (111) comprend un dispositif de chauffage pour chauffer et un dispositif de mélange pour mélanger les deux composants et **en ce que** sont disposés parallèlement aux tuyaux d'alimentation des tuyaux d'évacuation qui réalisent un retour/une remise en circulation des composants non mélangés vers leurs réservoirs (103, 105).

7. Procédé de moulage par transfert de résine (RTM) pour la fabrication, en particulier, de composants intégraux, utilisant une unité d'injection (10) et un outil (W) pouvant être fermé et muni d'une cavité de moulage (F) auquel l'unité d'injection (10) peut être couplée de telle manière qu'une résine d'injection puisse être introduite dans l'outil (W), lequel outil (W) présente au moins une sortie de résine (3) pouvant être fermée au moyen d'une unité d'obturation de l'écoulement de résine (5) et reliée à la cavité de moulage (F), par laquelle de la résine d'injection peut sortir après le remplissage du moule, une unité de mesure détectant l'écoulement de résine qui sort étant disposée au niveau ou en aval de la sortie de résine et couplée à l'unité d'obturation de l'écoulement de résine (5), et que lorsque l'écoulement de résine est détecté au moyen de l'unité de mesure, une unité de commande (11) émette vers l'unité d'obturation de l'écoulement de résine (5) un signal de fermeture de l'unité d'obturation de l'écoulement de résine (5) et cette dernière soit fermée et l'écoulement de résine sortant de l'outil (W) interrompu et qu'une pression créée pendant le procédé de moulage par transfert de résine dans la cavité de moulage (F) puisse être mesurée par au moins un capteur de pression (2) et que lorsqu'une pression prédéterminée est dépassée, l'unité d'obturation de l'écoulement de résine (5) fermée par le signal de l'unité de mesure/du capteur (4) se rouvre.

8. Procédé selon la revendication 7, **caractérisé en ce que** lorsque l'unité d'obturation de l'écoulement de résine (5) s'ouvre quand une pression maximale prédéterminée est dépassée dans la cavité de moulage (5), l'unité de mesure pour la détection de l'écoulement de résine est désactivée et **en ce que** l'unité d'obturation de l'écoulement de résine (5) se referme quand la pression baisse en dessous de la pression maximale prédéterminée.

9. Procédé selon la revendication 7 ou 8, **caractérisé en ce que** lorsqu'une pression prédéterminée est dépassée dans la cavité de moulage (F), le volume de pompage des composants à mélanger est réduit.

10. Procédé selon l'une des revendications 7 à 9, **caractérisé en ce que**
- dans un mode manuel ou automatique, la première fermeture de l'unité d'obturation de l'écoulement de résine (5) est déclenchée par la détection par le(s) capteur(s) (4) de la résine sortant de la sortie ou des sorties de résine (3) et au début d'une opération de rinçage par la suite du processus d'injection, le processus d'ouverture et de fermeture de l'unité d'obturation de l'écoulement de résine (5) est détecté et mémorisé par la commande (11) comme une séquence dans le temps de l'état ouvert/fermé (0,1) de toutes les unités d'obturation de l'écoulement de résine (5) jusqu'à la fin du processus d'injection et **en ce que** la commande (11) émet alors des avertissements sonores et/ou visuels si les paramètres de pression se situent au-dessus des valeurs limites prédéterminées,
- dans un processus partiellement dynamique, la routine saisie et enregistrée dans un processus dynamique se déroule comme un processus détecté dans le temps d'ouverture et de fermeture des valves antiretour à commande pneumatique sous la forme de l'unité d'obturation de l'écoulement de résine (5) et
- la routine du processus partiellement dynamique est mise à disposition sous forme de fichier dans un mode automatique et lue par le logiciel au démarrage du mode automatique et elle est lancée et exécutée au moment correspondant dans le processus d'injection et au besoin, le processus automatique se déroule, en tenant compte aussi du changement/de l'augmentation de la pression dans la cavité, dans le déroulement temporel du processus d'injection, auquel cas la commande (11) ouvre les valves antiretour au niveau desquelles des dépassements de pression se produisent jusqu'à ce que la pression repasse en dessous des valeurs limites.
